# EUROPÄISCHE PATENTSCHRIFT

(11) **EP 2 184 522 B1**
(45) Veröffentlichungstag und Bekanntmachung des Hinweises auf die Patenterteilung: **11.08.2010**
(21) Anmeldenummer: 08019461.6
(22) Anmeldetag: 06.11.2008
(51) Int. Cl.: F16K 31/128, F15B 15/10

(54) **Stelleinrichtung für ein pneumatisches Regelventil**
Setting device for a pneumatic control valve
Dispositif de réglage pour une soupape de réglage pneumatique

(43) Veröffentlichungstag der Anmeldung: 12.05.2010
(73) Patentinhaber: Arca Regler GmbH, 47918 Tönisvorst (DE)
(72) Erfinder: Nägel, Heinz Matthias, D-54550 Daun (DE); Rose, Stephan, 47807 Krefeld (DE)
(74) Vertreter: Paul, Dieter-Alfred

(56) Entgegenhaltungen:
- EP-A- 0 607 621
- EP-A- 0 971 134
- DE-C2- 4 239 431

## Beschreibung

Die vorliegende Erfindung betrifft eine Stelleinrichtung für ein pneumatisches Regelventil gemäß dem Oberbegriff von Anspruch 1 und ein pneumatisches Regelventil gemäß dem Oberbegriff von Anspruch 7

Regelventile mit einer solchen Stelleinrichtung sind in vielen Ausführungsformen bekannt, siehe beispielsweise die EP 0 971 134 A2 und die DE 42 39 432 C2. Sie weisen untenseitig ein Ventilgehäuse mit einem Durchflusskanal für das zu regelnde Fluid auf, an das sich nach oben ein Joch mit zwei vertikalen Jochstreben anschließt. An der Oberseite des Joches ist ein pneumatisch betriebener Membranstellantrieb angeordnet, dessen innenliegende Membran mit einer Ventilstange verbunden ist, welche sich durch das Joch nach unten in das ventilgehäuse erstreckt.

Zur Verbesserung der Stellgenauigkeit des Regelventils ist ein Stellungsregler vorgesehen, um Abweichungen in der Stellung des Regelventils, die beispielsweise durch Reibung in Stoffbuchsen oder durch Rückwirkung vom Medium erzeugt werden, auszugleichen. Der Stellungsregler ist mit einer der beiden durch die Membran aufgeteilten Kammern in dem Membranstellantrieb, nämlich mit der Druckkammer, durch einen Steuerluftkanal verbunden. Durch Steuerung der Luftzufuhr wird die Membranstellung und damit die Stellung der Ventilstange beeinflusst. Die Membran wird dabei auf der der Druckkammer abgewandten Seite durch ein Rückstellglied in Form einer oder mehrerer Federn beaufschlagt, die die Rückstellung der Membran bei einer gesteuerten Druckentlastung innerhalb der Druckkammer bewirkt.

Bei dem Regelventil, welches aus der EP 0 971 134 A2 bekannt ist, ist der Steuerluftkanal in einem Anschlussstück vorgesehen, welches an dem Joch gehalten ist. An diesem Anschlussstück ist auch der Stellungsregler festgeschraubt, so dass dieser einfach und schnell ausgetauscht werden kann. Als Problem wird jedoch teilweise empfunden, dass bei einem Austausch des Stellungsreglers die Druckkammer des Stellantriebs entlüftet wird. Hierdurch werden kontinuierliche Prozesse empfindlich gestört, so dass der Austausch des Stellungsreglers erst nach dem Abfahren der Anlage möglich ist.

Vor diesem Hintergrund besteht eine Aufgabe der vorliegenden Erfindung darin, eine Stelleinrichtung der eingangs genannten Art so auszubilden, dass beim Austausch des Stellungsreglers der pneumatische Stellantrieb nicht entlüftet wird.

Der Erfindung liegt damit die Überlegung zugrunde, den Steuerluftkanal absperren zu können, wenn der Stellungsregler beispielsweise zu Wartungszwecken ausgetauscht werden soll. Hierzu ist der Steuerluftkanal in mehrere Kanalabschnitte unterteilt ausgebildet, wobei zwei dieser Kanalabschnitte mit - beispielsweise horizontalem - Versatz zueinander angeordnet und durch einen Querkanalabschnitt miteinander verbunden sind. Dieser Querkanalabschnitt kann beispielsweise als eine Bohrung ausgebildet sein, die von außen in das Anschlussstück eingebracht ist und die beiden miteinander verbundenen Kanalabschnitte durchsetzt. Somit ist der Querkanalabschnitt von außen zugänglich, so dass Absperrmittel in den Querkanalabschnitt eingebracht werden können, um diesen zu sperren, auch wenn der Stellungsregler noch an dem Anschlussblock befestigt ist.

Diese Aufgabe ist erfindungsgemäß dadurch gelöst, dass der Steuerluftkanal mehrere Kanalabschnitt aufweist, wobei zwei dieser Kanalabschnitte versetzt zueinander angeordnet und durch einen Querkanalabschnitt miteinander verbunden sind, und dass Absperrmittel vorgesehen sind, durch welche der Steuerluftkanal im Bereich des Querkanalabschnitts abgesperrt werden kann, wobei die Absperrmittel von der Außenseite des Anschlussstückes her und durch einen der beiden durch den Querkanalabschnitt verbundenen Kanalabschnitte in den Querkanalabschnitt einbringbar sind.

Gemäß einer Ausführungsform der Erfindung ist vorgesehen, dass das Absperrmittel einen Bolzen aufweist, der einen zum Querkanalabschnitt korrespondierenden Durchmesser besitzt. Dabei sind zweckmäßigerweise in dem Querkanalabschnitt und/oder an dem Bolzen Dichtungsmittel vorgesehen, um den Ringspalt zwischen dem Querkanalabschnitt und dem Bolzen abzudichten und damit eine optimale Abdichtungswirkung zu erzielen.

Der Bolzen kann in das Anschlussstück eingeschraubt sein. Dabei ist der Bolzen zweckmäßigerweise mit einem Bolzenkopf versehen, der in eine mit dem Querkanalabschnitt fluchtende Gewindebohrung des Anschlusskopfes eingeschraubt ist. Auch hier können Dichtungsmittel vorgesehen sein, um einen Ringspalt zwischen dem Bolzenkopf und dem Anschlussstück abzudichten. Diese Ausführungsform bietet den Vorteil, dass ein Absperren des Querkanalabschnitts in einfacher Weise erfolgen kann, indem der Bolzen in den Anschlussblock eingeschraubt wird, bis das vordere Ende des Bolzens in den Querkanalabschnitt hineinragt und diesen versperrt.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: den oberen Teil eines Regelventils mit einer Stelleinrichtung gemäß der vorliegenden Erfin- dung in teilweise geschnittener Vorderansicht,
- Figur 2: einen Querschnitt durch das Anschlussstück der Stelleinrichtung aus Figur 1, und
- Figur 3: in schematischer Darstellung eine Schnittan- sicht durch ein Anschlussstück, welche die er- findungsgemäße Ausbildung eines Steuerluftka- nals gemäß der vorliegenden Erfindung zeigt.

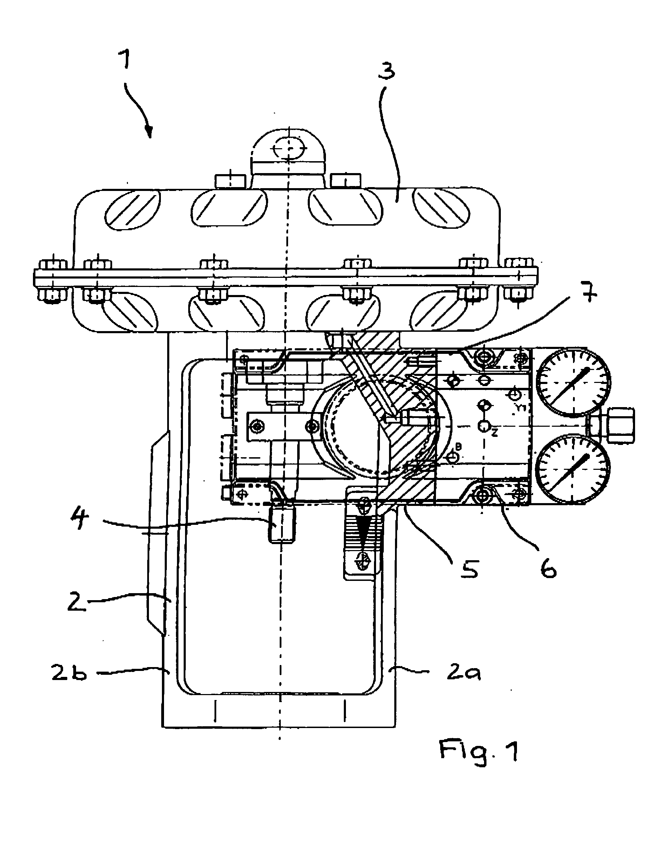

In der Figur 1 ist ein Regelventil 1 gemäß der vorliegenden Erfindung dargestellt. Dieses Regelventil 1 umfasst ein Joch 2 mit zwei aufrechten Jochstreben 2a, 2b, das an seinem unteren Ende an einem hier nicht dargestellten Ventilgehäuse mit einem Durchflusskanal für das zu steuernde Fluid angebracht ist. An seiner Oberseite trägt das Joch 2 einen pneumatischen Stellantrieb 3, der hier in der Form eines an sich bekannten Membranstellmotors ausgebildet ist. Von dem Membranstellmotor ist in der Zeichnung nur das Membrangehäuse bestehend aus zwei übereinander angeordneten Gehäuseschalen gezeigt. Innerhalb dieses Gehäuses ist eine Membran aus einem biegsamen Werkstoff, beispielsweise Kautschukmaterial eingespannt. Diese unterteilt den Innenraum des Membrangehäuses in eine untenliegende Druckkammer und eine darüber liegende Rückstellkammer und ist mit einer Ventilstange 4 verbunden, welche sich durch das Joch 2 nach unten erstreckt. Die Ventilstange 4 trägt an ihrem unteren Ende einen Ventilteller.

An der rechten Jochstrebe 2 ist ein Anschlussstück 5 befestigt, das einen Stellungsregler 6 trägt. Der Stellungsregler 6 ist üblicher Bauart und gewährleistet eine vorgegebene Zuordnung der Ventiltellerstellung als Regelgröße zum Stellsignal als Führungsgröße. Hierzu vergleicht der Stellungsregler 6 das von einer Regel- oder Steuereinrichtung kommende Steuersignal mit dem Hub des Ventiltellers und verändert bei einer fehlerhaften Zuordnung des Stellsignals zum Ventiltellerhub den Druck im Membrananstellmotor 3 solange, bis der Ventilteller im vorgegebenen Zusammenhang zum Stellsignal steht.

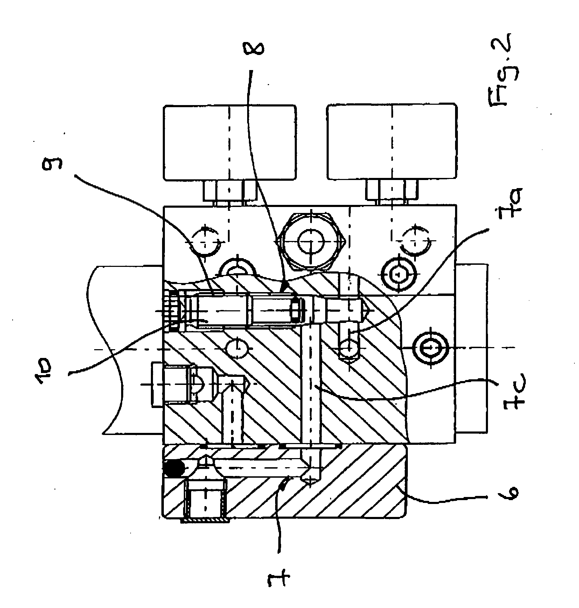

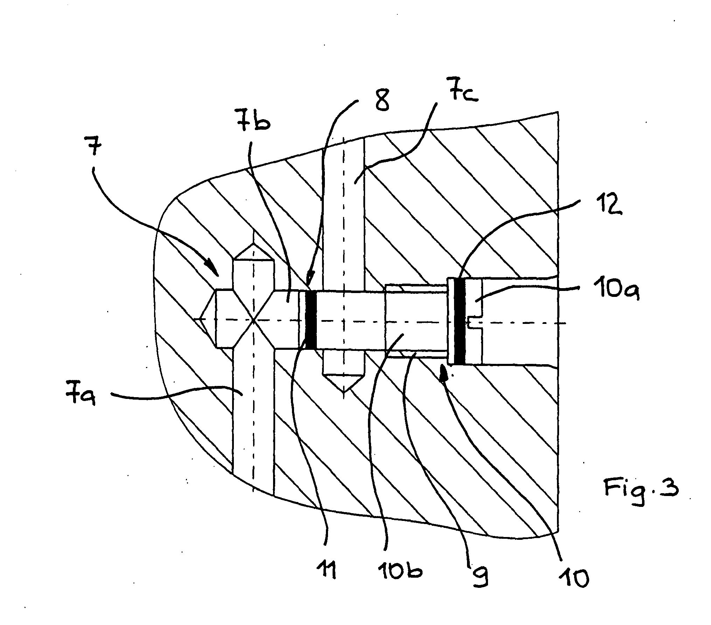

Hierzu ist die untenliegende Druckkammer des Membranstellmotors 3 mit dem Stellungsregler 6 über eine Steuerluftkanal 7 verbunden, die in dem Anschlussstück 5 ausgebildet ist. Erfindungsgemäß sind Vorkehrungen getroffen, um diesen Steuerluftkanal 7 absperren zu können, wenn der Stellungsregler 6 beispielsweise zu Wartungszwecken ausgetauscht werden soll. Wie insbesondere die Figuren 2 und 3 gut erkennen lassen, ist der Steuerluftkanal 7 in mehrere Kanalabschnitte 7a, 7b, 7c unterteilt ausgebildet, wobei zwei dieser Kanalabschnitte 7a, 7c mit horizontalem Versatz zueinander angeordnet und durch einen Querkanalabschnitt 7b miteinander verbunden sind. Der Querkanalabschnitt 7b ist Teil einer Querbohrung 8, die von außen in das Anschlussstück 5 eingebracht ist und die beiden miteinander verbundenen Kanalabschnitte 7a, 7c durchsetzt. Die Querbohrung 8 besitzt in ihrem den Querkanalabschnitt 7b bildenden Bereich einen Durchmesser, der etwa dem Durchmesser der beiden miteinander verbundenen Kanalabschnitte 7a, 7c entspricht, und in dem außerhalb davon gelegenen Bereich einen größeren Durchmesser. In diesem Bereich ist die Querbohrung 8 als Gewindebohrung 9 ausgebildet, in welche der Kopf 10a eines Bolzens 10 eingeschraubt ist. Dieser Bolzen 10 besitzt einen sich an den Bolzenkopf 10a anschließenden Fortsatz 10b, welcher einen dem Durchmesser des Querkanalabschnitts 7b entsprechenden Durchmesser besitzt und in den Querkanalabschnitt 7b so weit eingedreht werden kann, dass er diesen verschließt. Um eine Leckage von Luft aus dem Anschlussstück 5 zu vermeiden, sind Dichtungsringe 11, 12 an dem Bolzenkopf 10a und dem in den Querkanalabschnitt 7b eingreifenden Bereich des Bolzenfortsatzes 10b angeordnet, welche die zwischen dem Bolzen 10 und der Querbohrung 8 gebildeten Ringspalte abdichtet.

Im normalen Betrieb ist der Bolzen 10 so weit nach außen gedreht, dass der Bolzen 10 in den Steuerluftkanal 7 nicht eingreift. Wenn der Stellungsregler 6 entfernt werden soll, wird der Bolzen 10 in das Anschlussstück 5 so weit eingedreht, dass er den Querkanalabschnitt 7b des Steuerluftkanals 7, verschließt. Dann kann der Stellungsregler 6 von dem Anschlussstück entfernt 5 werden, ohne dass die Gefahr besteht, dass Luft aus der Druckkammer des Membranstellmotors 2 entweicht.

## Patentansprüche

1. Stelleinrichtung für ein pneumatische Regelventil (1), welches ein an einem Ventilgehäuse befestigbares Joch (2) und eine Ventilstange (4) aufweist, mit einem pneumatischen Stellantrieb (3) zur Betätigung der ventilstange (4) und einem Stellungsregler (6), der mit dem Stellantrieb (3) über eine in einem Anschlussstück (5) vorgesehene Steuerluftkanal (7) pneumatisch in Wirkverbindung steht, wobei der Stellantrieb (3), das Anschlussstück (5) und der Stellungsregler (6) an dem Joch (2) des Regelventils anbringbar sind, **dadurch gekennzeichnet, dass** der Steuerluftkanal (7) mehrere Kanalabschnitte (7a, 7b, 7c) aufweist, wobei zwei dieser Kanalabschnitte (7a, 7c) versetzt zueinander angeordnet und durch einen Querkanalabschnitt (7b) miteinander verbunden sind, und dass Absperrmittel (10) vorgesehen sind, durch welche der Steuerluftkanal (7) im Bereich des Querkanalabschnitts (7b) abgesperrt werden kann, wobei die Absperrmittel (10) von der Außenseite des Anschlussstückes (5) her und durch einen der beiden durch den Querkanalabschnitt (7b) verbundenen Kanalabschnitte (7a, 7c) in den Querkanalabschnitt (7b) einbringbar sind.

2. Stelleinrichtung nach Anspruch 1, **dadurch gekennzeichnet, dass** die Absperrmittel einen Bolzen (10) aufweisen, der einen zum Querkanalabschnitt (7b) korrespondierenden Durchmesser besitzt.

3. Stelleinrichtung nach Anspruch 1 oder 2, **dadurch gekennzeichnet, dass** in dem Querkanalabschnitt (7b) und/oder an dem Bolzen (10) Dichtungsmittel (11) vorgesehen sind, um den Ringspalt zwischen dem Querkanalabschnitt (7b) und dem Bolzen (10) abzudichten.

4. Stelleinrichtung nach Anspruch 3, **dadurch gekennzeichnet, dass** der Bolzen (10) in das Anschlussstück (5) eingeschraubt ist.

5. Stelleinrichtung nach Anspruch 4, **dadurch gekennzeichnet, dass** der Bolzen (10) einen in eine Gewindebohrung (9) des Anschlussstückes (5) eingeschraubten Bolzenkopf (10a) aufweist.

6. Stelleinrichtung nach Anspruch 5, **dadurch gekennzeichnet, dass** Dichtungsmittel (12) vorgesehen sind, um einen Ringspalt zwischen dem Bolzenkopf (10a) und dem Anschlussstück (5) abzudichten.

7. Pneumatisches Regelventil (1) mit einem an einem Ventilgehäuse befestigten Joch (2), einer Ventilstange (4), einem pneumatischen Stellantrieb (3) zur Betätigung der Ventilstange (4) und einem Stellungsregler (6), der über einen in einem Anschlussstück (5) vorgesehenen Steuerluftkanal (7) mit dem Stellantrieb (3) pneumatisch in Wirkverbindung steht, wobei der Stellantrieb (3), das Anschlussstück (5), der Stellungsregler (6) an dem Joch (2) angebracht sind, **dadurch gekennzeichnet, dass** der Steuerluftkanal (7) mehrere Kanalabschnitte (7a, 7b, 7c) aufweist, wobei zwei dieser Kanalabschnitte (7a, 7c) versetzt zueinander angeordnet und durch einen Querkanalabschnitt (7b) miteinander verbunden sind, und dass Absperrmittel (10) vorgesehen sind, durch welche der Steuerluftkanal (7) im Bereich des Querkanalabschnitts (7b) abgesperrt werden kann, wobei die Absperrmittel (10) von der Außenseite des Anschlussstückes (5) her und durch einen der beiden durch den Querkanalabschnitt (7b) verbundenen Kanalabschnitte (7a, 7c) in den Querkanalabschnitt (7b) einbringbar sind.

8. Pneumatisches Regelventil (1) nach Anspruch 7, **dadurch gekennzeichnet, dass** die Absperrmittel einen Bolzen (10) aufweisen, der einen zum Querkanalabschnitt (7b) korrespondierenden Durchmesser besitzt.

9. Pneumatisches Regelventil (1) nach Anspruch 7 oder 8, **dadurch gekennzeichnet, dass** in dem Querkanalabschnitt (7b) und/oder an dem Bolzen (10) Dichtungsmittel (11) vorgesehen sind, um den Ringspalt zwischen dem Querkanalabschnitt (7b) und dem Bolzen (10) abzudichten.

10. Pneumatisches Regelventil (1) nach Anspruch 9, **dadurch gekennzeichnet, dass** der Bolzen (10) in das Anschlussstück (5) eingeschraubt ist.

11. Pneumatisches Regelventil (1) nach Anspruch 10, **dadurch gekennzeichnet, dass** der Bolzen (10) einen in eine Gewindebohrung (9) des Anschlussstückes (5) eingeschraubten Bolzenkopf (10a) aufweist.

12. Pneumatisches Regelventil (1) nach Anspruch 11, **dadurch gekennzeichnet, dass** Dichtungsmittel (12) vorgesehen sind, um einen Ringspalt zwischen dem Bolzenkopf (10a) und dem Anschluesstück (5) abzudichten.

## Claims

1. A setting device for a pneumatic control valve (1) which has a yoke (2) fixable to a valve housing and a valve rod (4), comprising a pneumatic actuating drive (3) for operating the valve rod (4) and a position regulator (6) which is operatively connected pneumatically to the actuating drive (3) by means of a control air channel (7) provided in a connecting piece (5), the actuating drive (3), the connecting piece (5) and the position regulator (6) being attachable to the yoke (2) of the control valve, **characterised in that** the control air channel (7) has a number of channel sections (7a, 7b, 7c), two of these channel sections (7a, 7c) being disposed offset in relation to one another, and being connected to one another by a lateral channel section (7b), and that blocking means (10) are provided by means of which the control air channel (7) can be blocked in the region of the lateral channel section (7b), it being possible to introduce the blocking means (10) into the lateral channel section (7b) from the outside of the connecting piece (5) and through one of the two channel sections (7a, 7c) connected by the lateral channel section (7b).

2. The setting device according to Claim 1, **characterised in that** the blocking means have a bolt (10) which has a diameter corresponding to the lateral channel section (7b).

3. The setting device according to Claim 1 or 2, **characterised in that** sealing means (11) are provided in the lateral channel section (7b) and/or on the bolt (10) in order to seal the annular gap between the lateral channel section (7b) and the bolt (10).

4. The setting device according to Claim 3, **characterised in that** the bolt (10) is screwed into the connecting piece (5).

5. The setting device according to Claim 4, **characterised in that** the bolt (10) has a bolt head (10a) screwed into a threaded hole (9) of the connecting piece (5).

6. The setting device according to Claim 5, **characterised in that** sealing means (12) are provided in order to seal an annular gap between the bolt head (10a) and the connecting piece (5).

7. A pneumatic control valve (1) having a yoke (2) fixed onto a valve housing, a valve rod (4), a pneumatic actuating drive (3) for operating the valve rod (4) and a position regulator (6) which is operatively connected pneumatically to the actuating drive (3) by means of a control air channel (7) provided in a connecting piece (5), the actuating drive (3), the connecting piece (5), the position regulator (6) being attached to the yoke (2), **characterised in that** the control air channel (7) has a number of channel sections (7a, 7b, 7c), two of these channel sections (7a, 7c) being disposed offset in relation to one another, and being connected to one another by a lateral channel section (7b), and that blocking means (10) are provided by means of which the control air channel (7) can be blocked in the region of the lateral channel section (7b), it being possible to introduce the blocking means (10) into the lateral channel section (7b) from the outside of the connecting piece (5) and through one of the two channel sections (7a, 7c) connected by the lateral channel section (7b).

8. The pneumatic control valve (1) according to Claim 7, **characterised in that** the blocking means have a bolt (10) which has a diameter corresponding to the lateral channel section (7b).

9. The pneumatic control valve (1) according to Claim 7 or 8, **characterised in that** sealing means (11) are provided in the lateral channel section (7b) and/or on the bolt (10) in order to seal the annular gap between the lateral channel section (7b) and the bolt (10).

10. The pneumatic control valve (1) according to Claim 9, **characterised in that** the bolt (10) is screwed into the connecting piece (5).

11. The pneumatic control valve (1) according to Claim 10, **characterised in that** the bolt (10) has a bolt head (10a) screwed into a threaded hole (9) of the connecting piece (5).

12. The pneumatic control valve (1) according to Claim 11, **characterised in that** sealing means (12) are provided in order to seal an annular gap between the bolt head (10a) and the connecting piece (5).

## Revendications

1. Dispositiv de réglage pour une vanne de régulation (1) pneumatique qui présente une culasse (2) fixée sur un boîtier de vanne et une tige de vanne (4), avec un mécanisme de commande pneumatique (3) pour l'actionnement de la tige de vanne (4) et un régulateur de position (6), qui se trouve en relation de coopération pneumatique avec le mécanisme de commande (3) par un conduit d'air de commande (7) prévu dans une pièce de raccordement (5), sachant que le mécanisme commande (3), la pièce de raccordement (5), et le régulateur de position peuvent être placés sur la culasse (2) de la vanne de régulation, **caractérisé en ce que** le conduit d'air de commande (7) présente plusieurs sections de conduit (7a, 7b, 7c), sachant que deux de ces sections de conduit (7a, 7c) sont placées en décalage l'une par rapport à l'autre, et sont reliées l'une à l'autre par une section de conduit transversale (7b) et que des obturateurs (10) sont prévus, par lesquels le conduit d'air de commande (7) peut être fermé à l'endroit de la section de conduit transversale (7b), sachant que les obturateurs (10) peuvent être posés sur la section de conduit transversale (7b) depuis le côté extérieur de la pièce de raccordement (5) et par l'une des deux sections de conduit (7a, 7c) reliées par la section de conduit transversale (7b).

2. Commande selon revendication 1, **caractérisée en ce que** les obturateurs présentent un boulon (10) qui possède un diamètre correspondant à la section de conduit transversale (7B).

3. Commande selon revendication 1 ou 2, **caractérisée en ce que** dans la section de conduit transversale (7b) et/ou sur le boulon, des matériaux d'étanchéité (11) sont prévus pour boucher l'espace annulaire entre la section de conduit transversale (7b) et le boulon (10).

4. Commande selon revendication 3, **caractérisée en ce que** le boulon (10) est vissé sur la pièce de raccordement (5).

5. Commande selon revendication 4, **caractérisée en ce que** le boulon (10) présente une tête de boulon (10a) vissée dans un taraudage (9) de la pièce de raccordement (5).

6. Commande selon revendication 5, **caractérisée en ce que** des matériaux d'étanchéité (12) sont prévus pour boucher un espace annulaire entre la tête de boulon (10a) et la pièce de raccordement (5).

7. Vanne de régulation pneumatique (1) avec une culasse (2) fixée sur un boîtier de vanne, une tige de vanne (4), un mécanisme de commande pneumatique (3) pour actionnement de la tige de vanne (4) et un régulateur de position (6), qui se trouve en relation de coopération pneumatique avec le mécanisme de commande (3) par un conduit d'air de commande (7) prévu dans une pièce de raccordement (5), sachant que le mécanisme de commande (3), la pièce de raccordement, le régulateur de position (6) sont placés sur la culasse (2), **caractérisé en ce que** le conduit d'air de commande (7) présente plusieurs sections de conduit (7a, 7b, 7c), sachant que deux de ces sections de conduit (7a, 7c) sont placées en décalage l'une par rapport à l'autre et sont reliées l'une à l'autre par une section de conduit transversale (7b) et que des obturateurs (10) sont prévus par lesquels le conduit d'air de commande (7) peut être fermé à l'endroit de la section de conduit transversale (7b), sachant que les obturateurs (10) peuvent être posés sur la section de conduit transversale (7b) depuis le côté extérieur de la pièce de raccordement (5) et par l'une des deux sections de conduit (7a, 7c) reliées par la section de conduit transversale (7b) .

8. Vanne de régulation pneumatique (1) selon revendication 7, **caractérisée en ce que** les obturateurs présentent un boulon (10) qui possède un diamètre correspondant à la section de conduit transversale (7b).

9. Vanne de régulation pneumatique (1) selon revendication 7 ou 8 **caractérisée en ce que** dans la section de conduit transversale (7b) et/ou sur le boulon, des matériaux d'étanchéité (11) sont prévus pour boucher l'espace annulaire entre la section de conduit transversale (7b) et le boulon (10).

10. Vanne de régulation pneumatique (1) selon revendication 9, **caractérisée en ce que** le boulon (10) est vissé dans la pièce de raccordement (5).

11. Vanne de régulation pneumatique (1) selon revendication 10, **caractérisée en ce que** le boulon (10) présente une tête de boulon (10a) vissée dans un taraudage (9) de la pièce de raccordement (5).

12. Vanne de régulation pneumatique (1) selon revendication 11, **caractérisée en ce que** des matériaux d'étanchéité sont prévus pour boucher un espace annulaire entre la tête de boulon (10a) et la pièce de raccordement (5).
